# EUROPEAN PATENT SPECIFICATION

(11) **EP 1 514 378 B1**
(45) Date of publication and mention of the grant of the patent: **21.12.2016**
(21) Application number: 03736937.8
(22) Date of filing: 10.06.2003
(51) Int. Cl.: H04L 12/28, H04J 3/16, H04L 1/00

(54) **MULTIMEDIA SERVER WITH SIMPLE ADAPTATION TO DYNAMIC NETWORK LOSS CONDITIONS**
MULTIMEDIA-SERVER MIT EINFACHER ANPASSUNG AN DYNAMISCHE NETZWERKVERLUSTBEDINGUNGEN
SERVEUR MULTIMEDIA A ADAPTATION SIMPLE AUX CONDITIONS DYNAMIQUES DE PERTE DU RESEAU

(30) Priority: 11.06.2002 US 388108 P
(43) Date of publication of application: 16.03.2005
(73) Proprietor: Thomson Licensing, 92130 Issy-les-Moulineaux (FR)
(72) Inventor: BOYCE, Jill, MacDonald, Manalapan, NJ 07726 (US); GIRELLINI, Daniel, New Brunswick, NJ 08901 (US)
(74) Representative: Hofstetter, Schurack & Partner
(86) International application number: PCT/US2003/018062
(87) International publication number: WO 2003/104935

(56) References cited:
- EP-A1- 0 996 291
- EP-A1- 0 996 292
- EP-A2- 1 271 954
- US-A- 5 132 966
- US-A- 5 465 267
- US-A- 5 515 377
- US-A- 5 581 544
- US-A- 5 699 369
- US-A- 6 104 700
- US-A- 6 144 639
- US-B1- 6 233 283
- US-B1- 6 377 546
- BOYCE J M: "Packet loss resilient transmission of MPEG video over the Internet - Principles, Protocols, and Architecture" SIGNAL PROCESSING. IMAGE COMMUNICATION, ELSEVIER SCIENCE PUBLISHERS, AMSTERDAM, NL LNKD- DOI:10.1016/S0923-5965(99)00021-1, vol. 15, no. 1-2, 1 September 1999 (1999-09-01), pages 7-24, XP004180635 ISSN: 0923-5965

## Description

### FIELD OF THE INVENTION

This invention relates towards the field of transmitting prioritized data based on network conditions.

### BACKGROUND OF THE INVENTION

With the development of communications networks (network fabric) such as the Internet and the wide acceptance of broadband connections, there is a demand by consumers for video and audio services (for example, television programs, movies, video conferencing, radio programming) that can be selected and delivered on demand through a communication network. Video services, referred to as media objects or streaming audio/video, often suffer from quality issues due to the bandwidth constraints and the bursty nature of communications networks generally used for streaming media delivery. The design of a streaming media delivery system therefore must consider codecs (encoder/decoder programs) used for delivering media objects, quality of service (QoS) issues in presenting delivered media objects, and the transport of information over communications networks used to deliver media objects, such as audio and video data delivered in a signal.

Codecs are typically implemented through a combination of software and hardware. This system is used for encoding data representing a media object at a transmission end of a communications network and for decoding data at a receiver end of the communications network. Design considerations for codecs include such issues as bandwidth scalability over a network, computational complexity of encoding/decoding data, resilience to network losses (loss of data), and encoder/decoder latencies for transmitting data representing media streams. Commonly used codecs utilizing both Discrete Cosine Transformation (DCT) (e.g., H.263+) and non-DCT techniques (e.g., wavelets and fractals) are examples of codecs that consider these above detailed issues. Codecs are also used to compress and decompress data because of the limited bandwidth available through a communications network.

Quality of service issues relate to the delivery of audio and video information and the overall experience for a user watching a media stream. Media objects are delivered through a communications network, such as the Internet, in discrete units known as packets. These units of information, typically transmitted in sequential order, are sent via the Internet through nodes commonly known as servers and routers. It is therefore possible that two sequentially transmitted packets arrive at a destination device at different times because the packets may take different paths through the Internet. Consequentially, a QoS problem known as dispersion could result where a packet transmitted later in time may be processed and displayed by a destination device before an earlier transmitted packet, leading to discontinuity of displayed events. Similarly, it is possible for packets to be lost when being transmitted. A destination device typically performs an error concealment technique to hide the loss of data. Methods of ensuring QoS over a network such as over-allocating the number of transmitted packets or improving quality of a network under a load state may be used, but these methods introduce additional overhead requirements affecting communication network performance.

Communication networks control the transfer of data packets by the use of a schema known as a transport protocol. Transmission Control Protocol (TCP), described in Internet Engineering Task Force (IETF) Request For Comments (RFC) 793, is a well-known transport protocol that controls the flow of information throughout a communications network. A transport protocol attempts to stabilize a communications network by maintaining parameters such as flow control, error control, and the time-organized delivery of data packets. These types of controls are administered through the use of commands that exist in a header of a packet or separately from packets transmitted between devices through the communications network. This control information works well for a communications network that operates in a "synchronous" manner where the transmission of data packets tends to be orderly.

Other types of media objects, in the form of streamed data, tend to be delivered or generated asynchronous by where the flow of packets may not be consistent. These packets are transmitted and received at different times, hence asynchronously, where received packets are reconstituted in view of data in the headers of such packets. The transmission of asynchronous packets suffers when network conditions drastically reduce the transmission (or receipt) of packets, resulting in network loss of service, degradation, or other conditions requiring a transmission to time out.

One way of reducing the amount of errors in the transmission of a data uses a technique called forward error coding (FEC) where some data is repeated in a data stream. By using FEC, other methods of error correction such as error concealment, flow control, and the like are not required for a user to acquire successfully a media object transmitted in a data stream. FEC however requires that the transmitter of data stream take into account network conditions that lead to a corruption or loss of data packets impacting an encoder that encodes data on the fly.

Documents EP 0996291 A1 and EP 0996292 A1 describe methods for encoding a video signal, wherein, in order to transmit an inter-frame coded video signal, such as an MPEG-coded video signal, over a packet-based network such as the Internet, the video signal associated with at least one video frame is split into a high priority partition and a low priority partition. A systematic forward error correction code, such as a Reed Solomon code, is then applied to bytes in the high priority partition. Furthermore, the article "BOYCE JM: "Packet loss resilient transmission of MPEG video over the Internet - Principles, Protocols, and Architecture" SIGNAL PROCESSING. IMAGE COMMUNICATION, ELSEVIER SCIENCE PUBISHERS, AMSTERDAM, NL LNKD - DOI:10.1016/S0923-5965(99)00021-1, vol. 15, no. 1-2, 1 September 1999 (1999-09-01), pages 7-24, XP004180635 ISSN: 0923-5965" discloses a method to protect MPEG video quality from packet loss for real-time transmission over the Internet. Because MPEG uses inter-frame coding, relatively small packet loss rates in IP transmission can dramatically reduce the quality of the received MPEG video. In the proposed high-priority protection (HiPP) method, the MPEG video stream is split into high- and low-priority partitions, using a technique similar to MPEG-2 data partitioning. Overhead resilient data for the MPEG video stream is created by applying forward error correction coding to only the high-priority portion of the video stream.

### SUMMARY OF THE INVENTION

A method for transmitting prioritized data encoded by a Forward Error Coding operation is disclosed. A media object is separated into different classes of data, forming a base layer and at least one enhancement layer of information, with each layer having associated parity data. Data of the separated media object, formed of classified data, is later encoded and stored, whereby information of the base layer is assigned a higher priority for transmission than enhancement layer data. Such priority classifications are used when a server transmits a composition of classified data over a network fabric, as prioritized data. Specifically, methods according to claims 1, 6 and 12 are provided.

### BRIEF DESCRIPTION OF THE DRAWINGS

FIG. 1 is a diagram of a system illustrating the prioritization, encoding, and transmission of a media object, according to an illustrative embodiment of the invention.
FIG. 2 is a block diagram of a method for generating and transmitting classified data representing a media object as prioritized data, according to an illustrative embodiment of the invention.
FIG. 3 is a block diagram of method decoding prioritized data representing a media object, according to an illustrative embodiment of the invention.

### DETAILED DESCRIPTION OF THE INVENTION

As used herein, multimedia related data that is encoded and is later transmitted represents a media object. The terms information and data are also used synonymously throughout the text of the invention as to describe pre or post encoded audio/video data. The term media object includes audio, video, textual, multimedia data files, and streaming media files. Multimedia files comprise any combination of text, image, video, and audio data. Streaming media comprises audio, video, multimedia, textual, and interactive data files that are delivered to a user's device via the Internet or other communications network environment and begin to play on the user's computer/ device before delivery of the entire file is completed. One advantage of streaming media is that streaming media files begin to play before the entire file is downloaded, saving users the long wait typically associated with downloading the entire file. Digitally recorded music, movies, trailers, news reports, radio broadcasts and live events have all contributed to an increase in streaming content on the Web. In addition, the reduction in cost of communications networks through the use of high-bandwidth connections such as cable, DSL, T1 lines and wireless networks (e.g., 2.5G or 3G based cellular networks) are providing Internet users with speedier access to streaming media content from news organizations, Hollywood studios, independent producers, record labels and even home users themselves.

The preferred embodiment of the invention makes use of a subset of FEC techniques known as forward erasure correction (FXC) where the content of a media object is pre-encoded into separate partitions. Using techniques known in the art, a media object is encoded into different classes of data, referred to as classified data. Each class of data represents a different layer of information (i.e., a base and enhancement layers) where the base layer represents data crucial for rendering a media object and the enhancement layers being data that is less critical but important for adding detail to a rendered media object.

The classified data is further refined by using systematic FXC codes, such as Reed Solomon (RS) codes, as to create parity data that is transmitted with the data representing base and enhancement layers of an encoded media object. Specifically, RS is used to produce erasure codes of various strengths whereby overhead rates for communication data can be generated using a RS code with different (n, k) parameters; n equal to the total amount of data to be transmitted (encoded layer data with parity data) and k equal to the amount of encoded data.

When used for erasure correction, an RS code can correct up to h=n-k erasures (or the amount of data missing from a transmitted data stream). If the exemplary system uses a Galois Field with 8 bit symbols as the basis of transmitted data, the maximum value of n is calculated q=p^r (q=maximum value of n, p=amount of data states, r=number of items with data states). Hence, for an 8 bit symbols, p=2 (a bit having two states) and r=8 (number of bits), the maximum value of n is 255.

Shorter length FXCs can be used by only computing and transmitting as many parity bits that are desired or needed. Once a maximum calculated, a smaller RS (n', k) may be derived from a RS (n, k) code where n'<n, which is modified depending on the desired erasure protection strength (see, L. Rizzo, "Effective Erasure Codes for Reliable Computer Communications Protocol", Computer Communication Review, 27(2): pgs. 24-36, April 1997),The calculated parity bits for encoded data may change in accordance with network conditions or encoder performance.

As an example of encoding a byte based code based on a 2^8 Galois Field, a maximum value of n=255 is calculated. A RS(n',k) code is selected, where the Reed Solomon code is based on an RS(255, k), and n'-k parity bytes are encoded. As the value of n' increases, the original parity bytes encoded (n'-k) are not changed. That is, for a Reed Solomon code for a RS(11, 10) based on a RS(255, 10), the 11th parity byte has the same value as the 11th parity byte in an RS(12,10) code. It is to be noted that the principles of the present invention may be modified to accommodate different values of n, n', p, r, and k depending on the needs of an encoding/transmitting system.

Preferably, RS coding of data is interleaved across packets or frames. That is, entire packets or frames will be made up of either information or parity data. These packets, in order to simplify the process of identifying missing packets, may be identified by information in the packet headers. Hence, a media object requester would be able to identify missing packets if the packet headers are sequentially generated, and there is a gap in the numeric sequence. Real Time Transport Protocol (RTP) is one transport mechanism used for generating sequential packet headers, although other transport protocols may be selected in accordance with the principles of the present invention.

Additionally, different levels of channel loss protection are achieved by grouping parity packets into several multicast groups. A client receiving such data can adjust the level of channel loss protection by joining (or leaving) as many multicast groups as needed, hence the client may adapt to the loss of data by increasing the channel bandwidth by joining more multicast groups, as needed. This technique of multicasting is described because the source-encoding rate of a FXC encoder is typically not adjusted in the case where content is pre-encoded and stored on a storage device, for an exemplary embodiment of the present invention.

When encoding a media object separated into different classes of data layers, it is desirable to offer a higher FXC strength for base layer data and a lower FXC strength for enhancement layer data is accomplished by using scalable video compression with unequal error protection. For an exemplary embodiment of the present invention, a media object is separated into two layers of classified data: base layer information (Bi) and enhancement layer information (Ei). Accordingly, the base layer has parity data (Bp) and the enhancement layer has parity data (Ep); each of layer and parity data are afforded their own data types. Bi and Bp is data that is more important than Ei and Ep data, because Bi and Bp data is more critical for rendering media object than Ei and Ep data. It should be noted that the principles of the present invention apply where a media object is prioritized into as many layers as needed, for example, one base layer and multiple enhancement layers.

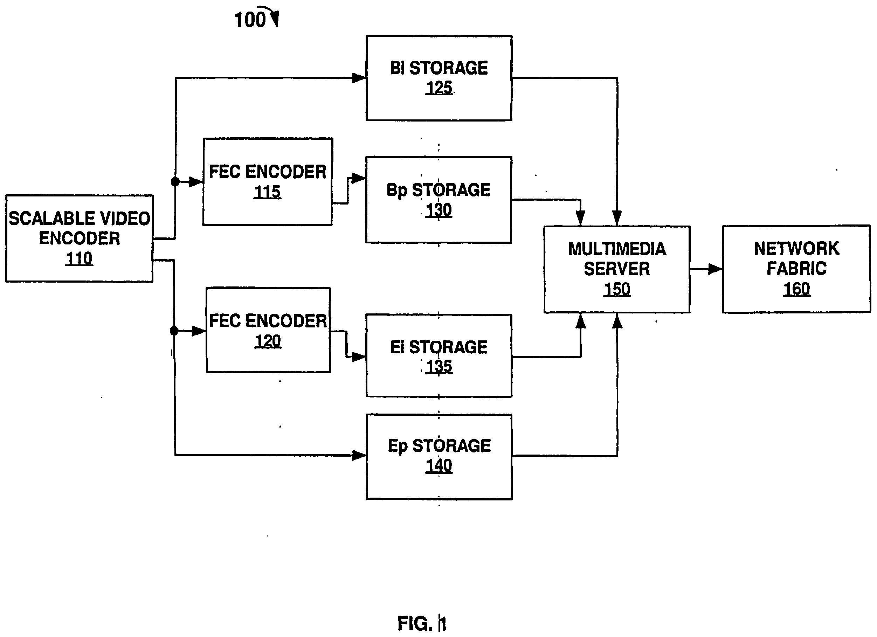

An exemplary embodiment of the invention, shown as encoding system 100 in FIG. 1, presents scalable video encoder 110 that creates compressed bit streams from a media object being encoded. Scalable video encoder 110 may be implemented in software, hardware, or in a combination of both. The media object is divided into separate layers of classified data as described above, where the data once separated, is placed in a bitstream corresponding to a priority assigned to each layer and packed into packets for network transmission via network fabric 160, such as a communications network or the Internet. Preferably, each layer is FXC encoded, using a systematic FEC encoder 115, 120 across packets for protection against network packet loss. The priority of each layer of classified data is associated with the importance of transmitted data eventually used to render a media object.

More specifically in this exemplary embodiment, scalable video encoder 110 separates the media object into two layers, representing a base layer and an enhancement layer. Data representing the base layer is inputted into FEC encoder 115 where Bi information is generated via a FXC encoding process. This generated data is stored as pre-encoded data in Bi storage 125. FEC encoder 115 also creates Bp data that is stored in Bp storage 130 when generating Bi information.

Similarly, data representing the enhancement layer is inputted into FEC encoder 120 where Ei information is generated via a FXC encoding process. This generated data is stored as pre-encoded data in Ei storage 135. FEC encoder 115 also creates Ep data that is stored in Ep storage 140 when generating Ei information. Different strength FXC codes can be used for the base and enhancement layers, depending on network and system requirements. Preferably, when adjusting the FXC strength of transmitted RS codes, an indication the contents of data packets is transmitted, either in data packet headers or as separate side information.

When a request is made for a media object via network fabric 160, multimedia server 150 preferably determines the available bandwidth and expected (or real time) network loss conditions that effect the requester of the media object. This type of determination may be made based on a user profile, information communicated in the request for a media object, historical network conditions, network service reporting information (such as Real time Transport Control Protocol (RTCP) reports obtained during the transmission of data), and the like. Optionally, multimedia server 150 determines the type of network path to be used to deliver the pre-encoded media object to estimate a possible network loss. For example, multimedia server 150 expects a higher loss rate of data when a wireless connection is used versus a landline or broadband connection to communicate data.

Multimedia server 150, in response to the determination of network conditions, selects Bi, Bp, Ei and Ep date from their associated storage areas based on the level of priority assigned to the selected data. This priority level is related to the importance of the data as used to render a media object. Hence, base layer data is considered more important and is more likely to be transmitted than enhancement layer data during periods of network congestion. After selecting classes of data to be transmitted, multimedia server 150 creates a composition of classified data by prioritizing and formatting such selected data. This composition of classified data, known as prioritized data, reflects multimedia encoder 150 adjusting the classes of data transmitted in view of network conditions, where a minimum level of base layer information is required to render a media object. As network conditions improve, the composition of classified data includes more enhancement layer information and associated parity information.

Multimedia server 150 transmits data packets of prioritized data over network fabric 160. Specifically, multimedia server 150 seeks to optimize the playback quality of multimedia data received by a requestor of a media object by adjusting the composition of Bi, Bp, Ei, and Ep transmitted in accordance with their respective priority classifications. For example, if no loss of data is expected from a network, multimedia server transmits all of the Bi and Ei information in data packets. Bp and Ep data is transmitted as space/bandwidth allows, preferably with more Bp data being transmitted than Ep data.

When there is an expected level of network loss, multimedia server 150 replaces Ep data with Bp data in the composition forming prioritized data. With very high levels of expected network loss, multimedia server replaces an amount of Ei information transmitted with Bp data because a requested media object will not be capable of being rendered without a baseline of Bi information that is received or recovered using Bp data. It is to be noted that there may be a limit to the bandwidth available to a media object requester due to physical or pre-set bandwidth limits of a network.

In an optional embodiment of the present invention, multimedia server 150 attempts to optimize the delivery of a media object to a requestor by determining the amount of expected network loss, as explained above. Assuming that the bandwidth to a requestor is fixed, multimedia server 150 transmits a composition of Bi information and an amount of Bp data necessary to achieve a corrected error rate, in response to the expected network loss. If there is any available bandwidth after the transmission of Bi and Bp data, multimedia server 150 fills the space first with Ei and then Ep data. The tradeoff between transmitting Bp versus Ei or Ep depends on many factors such as the expected range of network loss conditions, effectiveness of the scalable encoding, viewer preferences, nodes in a network, and the like.

Preferably, multimedia server 150 will use high strength FXC codes when transmitting Bi, Bp, Ei, and Ep data representing an encoded media object. By using system 100, stored FXC codes will not need to be recomputed each time expected network conditions change for a new media object requestor.

In the operation of encoding system 100, a temporal encoding technique is preferred over spatial, Signal Noise Ratio (SNR), or simple data partitioning encoding techniques because temporal based processes do not suffer from the problem of "drift". Specifically, when decoding an media object that has been prioritized and separated into layers, periods of drift occur when decoding base and enhancement layer data after exclusively decoding base layer data. The reconstructed media object (especially video) rendered from the base and enhancement layer data will continue to appear as if it were being rendered during the time of just base layer data. This drift effect is minimized if base and enhancement layers were exclusively used for decoding a media object.

The problem of drift is eliminated when temporally encoded video based media objects place bidirectional "B" coded pictures in the enhancement layer, and "I" and "P" frames are placed in the base layer. Preferably, the B coded pictures in the enhancement layer are not used to predict other pictures. Hence, when media server 150 transmits Bp data instead of Ei information, a media object requestor's video frame rate is reduced, but the per frame video quality is not reduced if the FXC code strength is sufficient to correct all network loss.

During periods of network disruption, a media object requestor would use correctly received Ei information to increase the frame rate of video, which is be greater than the frame rate of video using only base layer data. When network conditions improve, more Ei information is transmitted, and the frame rate of the video will likewise improve, with the quality of rendered video. Optionally, the media object requestor (or decoder of the media object requestor) may request that the composition of transmitted Bi, Bp, Ei, and Ep data as priority data be changed in accordance with network conditions. Multimedia server 150 implements this request.

Ideally, Bi, Bp, Ei, and Ep data are packed into data packets, where fixed sizes of data packets are used. Multimedia server 150 is able to swap entire data packets during transmission, as to maintain a constant data transmission rate. A drawback to this technique however prevents a correspondence between video frames or slices and data packets, as suggested in IETF RFC 2250 and RFC 2190. An alternative embodiment of the present invention is supported where the data packets do correspond to video frames or slices, which depends upon the technique selected for packing and processing data packets.

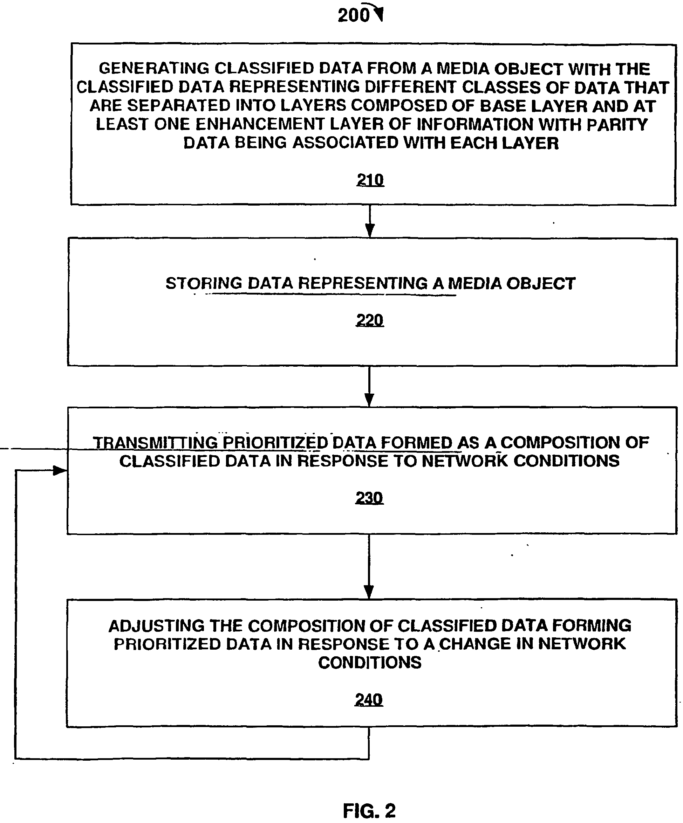

FIG. 2 represents block diagram of a method 200 for the transmission of prioritized data representing a media object by multimedia server 150, in accordance with an exemplary embodiment of the present invention. In step 210, scalable video encoder 110 and FEC encoders 115 and 120 encode a media object into levels of classified data. Specifically, scalable encoder 110 separates a media object into several classes of data, denoted as separate layers, with each layer corresponding to the importance of data used for rendering a media object. The layers of data form a base layer and at least one enhancement layer(s) of information. The separated layers of classified data are relayed to FEC encoders 115 and 120 for FXC encoding. During the encoding process, parity data associated to each layer is generated and is later stored in step 220. Importantly, the generated information and parity data corresponding to each layer is stored in their respective storage areas, such as base layer information being stored in Bi storage 125 and the associated priority information being stored in Bp storage 130. Optionally, there are as many storage areas as there are layers of classified data.

Multimedia server 150, in response to a request for a media object, prioritizes a composition of classified data into prioritized data and transmits such data in response to network conditions in step 230. The prioritization of classified data is determined by the level of priority assigned to each layer of classified data. Multimedia server 150 forms the composition of classified data, as prioritized data, in view of network conditions. When network conditions result in the loss of data, data with a higher priority level is more likely to be transmitted than data with a lower priority level. Conversely, data with a lower priority is more likely to be transmitted when network conditions result in fewer data packets being loss.

The determination of network conditions, as described above, may either be expected or real-time network conditions. Accordingly, multimedia server 150 retrieves data from storage 125, 130, 135, and 140 in accordance with network conditions. If a network encounters many problems, more Bi, and Bp data is retrieved and transmitted over network fabric 160, versus periods of no network problems where more Ei and Ep data is transmitted.

Multimedia server 150 adjusts the composition of classified data, forming prioritized data, in response to a change in network conditions in step 240. If network conditions improve, multimedia server 150 will transmit more enhancement layer related information (Ei, Ep). If network conditions worsen during a transmission, multimedia server 150 will replace enhancement layer associated data with more base layer associated data (Bi, Bp). This process may be repeated between steps 230 and 240 as network conditions change frequently.

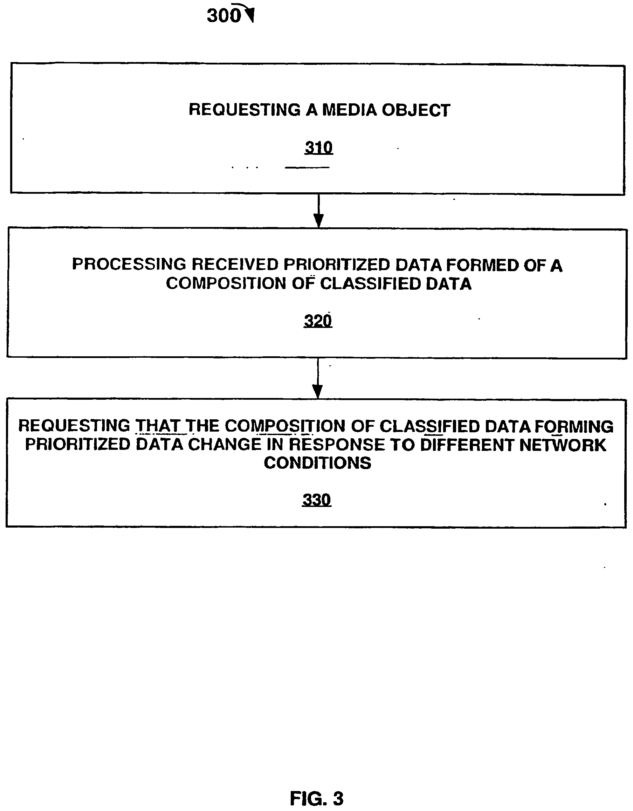

FIG. 3 presents a block diagram of method 300 for an exemplary embodiment of a decoder decoding prioritized data operating in accordance with the principles of the present invention. Specially, in step 310 a media object requester makes a request for a media object via network fabric 160. Multimedia server 150 preferably receives this request, where the present network conditions of the requester are communicated with the request.

In step 320, a decoder used by the media object requester begins to process received prioritized data, wherein such data preferably has at least Bi information. The decoder uses prioritized data formed of a composition of classified data to render a media object as audio, video, or a combination of both. If the decoder receives more Ei data, a decoder renders a media object at a higher level of quality than possible with just Bi information. The receipt of parity data related to either the base layer or enhancement layer(s) assists in the generation of missing Bi or Ei information if network conditions result in the loss of transmitted data.

In an optional embodiment of the invention, a decoder uses FXC decoding if data was lost during the receipt of data packets representing a media object. Specifically, the decoder may not receive all of the transmitted data representing either Bi or Ei information. By using FXC decoding, the decoder generates missing Bi information from received Bp data and missing Ei information from received Ep data.

The decoder, in step 330, requests that the composition of classified data transmitted as prioritized data change, because network conditions are different. Specifically, the decoder either requests that enhancement layer information be replaced by base layer parity data, for degrading network conditions, or for more enhancement layer or parity data for improving network conditions. The mechanics of the decoder of the media object requestor is similar to the inverse of the operation of scalable video encoder 110.

The present invention may be embodied in the form of computer-*implemented processes and apparatus for practicing those processes. The present invention may also be embodied in the form of computer program code embodied in tangible media, such as floppy diskettes, read only memories (ROMs), CD-ROMs, hard drives, high density disk, or any other computer-readable storage medium, wherein, when the computer program code is loaded into and executed by a computer, the computer becomes an apparatus for practicing the invention. The present invention may also be embodied in the form of computer program code, for example, whether stored in a storage medium, loaded into and/or executed by a computer, or transmitted over some transmission medium, such as over electrical wiring or cabling, through fiber optics, or via electromagnetic radiation, wherein, when the computer program code is loaded into and executed by a computer, the computer becomes an apparatus for practicing the invention. When implemented on a general-purpose processor, the computer program code segments configure the processor to create specific logic circuits.

## Claims

1. A method for communicating data representing a media object encoded into classified data representing
- base layer information (Bi) and
- enhancement layer information (Ei) through a network fabric (160), comprising the steps of:
- generating, for transmission (230) on the network, a composition of the classified data as prioritized data according to expected network conditions
wherein
the classified data comprises
- at least one of base layer information (Bi) with associated base layer parity information (Bp) and
- at least one of enhancement layer information (Ei) with associated enhancement layer parity information (Ep);
- adjusting (240) the composition of prioritized data for transmission in response to a change in network conditions resulting in a loss of data on said network, wherein
an amount of data of said enhancement layer parity information (Ep) or said enhancement layer information (Ei) is reduced and
an amount of data of said parity information (Bp) associated with said base layer is increased,
by replacing said enhancement layer parity information (Ep) or said enhancement layer information (Ei) with said base layer parity information (Bp) respectively; and
- transmitting said adjusted prioritized data over said network to a user.

2. The method of Claim 1, wherein the classified data is pre-encoded.

3. The method of Claim 1, wherein the transmitting step is enabled by a multimedia server.

4. The method of Claim 1, wherein the prioritized data is encoded by an encoding operation selected from at least one of: temporal scalability and data partitioning.

5. The method of Claim 1, wherein the prioritized data is transmitted as data packets that are sequentially numbered.

6. A method for communicating data representing a media object encoded into classified data representing base layer information and enhancement layer information through a network fabric (160) comprising the steps of:
- generating, for transmission (230) on the network, a composition of the classified data as prioritized data according to expected network conditions wherein
the classified data comprises
- at least one of base layer information (Bi) with associated base layer parity information (Bp) and
- at least one of enhancement layer information (Ei) with associated enhancement layer parity information (Ep);
- reducing an amount of the base layer information (Bi) and associated base layer parity information (Bp) and
- increasing an amount of enhancement layer information (Ei) and associated enhancement layer parity information (Ep)
forming the composition of prioritized data when network conditions are favourable for rendering the media object,
and
- transmitting said adjusted prioritized data over said network to at least one user.

7. The method of Claim 1, wherein the classified data is pre-encoded by a forward error correction code operation using Reed Solomon codes and the classified data is stored according to data class.

8. The method of Claim 7, wherein a multimedia server selects the composition of prioritized data to be transmitted based on network conditions by accessing a data store corresponding to data class.

9. The method of Claim 1, wherein more than one layer of enhancement information and associated priority data form the classified data.

10. The method of Claim 1, wherein network conditions considered during the transmission step comprise as least one of: available bandwidth, expected loss of transmitted data, actual loss of transmitted data based on a user profile, historic network conditions, and a specific request for the composition of classified data transmitted as the prioritized data.

11. The method of Claim 1, wherein network conditions considered during the adjustment step comprise at least one of: a change in available bandwidth, a change in the expected loss of transmitted data, a change in the loss of transmitted data, and a request to change the composition of classified data transmitted as the prioritized data.

12. A method for adjusting and communicating prioritized data representing a media object,
comprising the steps of:
- determining network conditions;
- transmitting prioritized data in accordance with network conditions,
wherein
the prioritized data is generated as a composition of classified data representing at least one base layer of information (Bi) with associated parity data (Bp) and at least one enhancement layer of information (Ei) with associated parity data (Ep);
and
the composition of transmitted base layer information (Bi) with associated parity data (Bp) and the enhancement layer information (Ei) with associated parity data (Ep) is determined according to expected network conditions,
wherein
(i) when said network conditions improve,
a transmitted amount of data associated with said enhancement layer (Ei, Ep) is increased and
a transmitted amount of data associated with said base layer is decreased,
and
(ii) when said network conditions worsen;
said transmitted amount of data associated with said enhancement layer (Ei, Ep) is decreased and
said transmitted amount of data associated with said base layer is increased, by replacing enhancement layer associated with more base layer associated data.

13. The method of Claim 12, wherein prioritized data is sent in the form of data packets.

14. The method of Claim 13, wherein data packets are packed with more enhancement layer information with associated parity data when space is available.

15. The method of Claim 12, wherein the composition of classified data transmitted as the prioritized data is changed in response to a request from a decoder.

16. The method of Claim 12, wherein network conditions considered during the determination step comprise as least one of: available bandwidth, expected loss of transmitted data, actual loss of transmitted data based on a user profile, historic network conditions, and a specific request for the composition of classified data transmitted as the prioritized data.

17. The method of Claim 12, wherein when said
network experiences data losses, bidirectional "B" frames are exclusively placed in said enhancement layer and intra-coded "I" frames and predictive "P" frames are exclusively placed in said base layer until said data loss is reduced.

## Patentansprüche

1. Verfahren zum Übermitteln von Daten, die ein Medienobjekt repräsentieren, das zu klassifizierten Daten codiert ist, die Folgendes repräsentieren:
- Basisschichtinformationen (Bi) und
- Erweiterungsschichtinformationen (Ei), über eine Netz-Fabric (160),
wobei das Verfahren die folgenden Schritte umfasst:
- Erzeugen einer Zusammensetzung der klassifizierten Daten als priorisierte Daten in Übereinstimmung mit erwarteten Netzbedingungen zur Übertragung (230) in dem Netz, wobei
- die klassifizierten Daten umfassen:
- mindestens eine von Basisschichtinformationen (Bi) mit zugeordneten Basisschicht-Paritätsinformationen (Bp) und
- mindestens eine von Erweiterungsschichtinformationen (Ei) mit zugeordneten Erweiterungsschicht-Paritätsinformationen (Ep);
- Einstellen (240) der Zusammensetzung priorisierter Daten zur Übertragung in Ansprechen auf eine Änderung der Netzbedingungen, die zu einem Verlust von Daten in dem Netz führen, wobei
eine Menge von Daten der Erweiterungsschicht-Paritätsinformationen (Ep) oder der Erweiterungsschichtinformationen (Ei) verringert wird und
eine Menge von Daten der der Basisschicht zugeordneten Paritätsinformationen (Bp) erhöht wird,
indem die Erweiterungsschicht-Paritätsinformationen (Ep) bzw. die Erweiterungsschichtinformationen (Ei) durch die Basisschicht-Paritätsinformationen (Bp) ersetzt werden, und
- Übertragen der eingestellten priorisierten Daten über das Netz an einen Nutzer.

2. Verfahren nach Anspruch 1, wobei die klassifizierten Daten im Voraus codiert worden sind.

3. Verfahren nach Anspruch 1, wobei der Schritt des Übertragens durch einen Multimediaserver ermöglicht wird.

4. Verfahren nach Anspruch 1, wobei die priorisierten Daten durch eine Codierungsoperation codiert werden, die aus mindestens einem der Folgenden ausgewählt wird: zeitliche Skalierbarkeit und Datenpartitionierung.

5. Verfahren nach Anspruch 1, wobei die priorisierten Daten als Datenpakete übertragen werden, die aufeinanderfolgend nummeriert sind.

6. Verfahren zum Übermitteln von Daten, die ein Medienobjekt repräsentieren, das zu klassifizierten Daten codiert ist, die Basisschichtinformationen und Erweiterungsschichtinformationen repräsentieren, über eine Netz-Fabric (160), wobei das Verfahren die folgenden Schritte umfasst:
- Erzeugen einer Zusammensetzung der klassifizierten Daten als priorisierte Daten in Übereinstimmung mit erwarteten Netzbedingungen zur Übertragung (230) in dem Netz, wobei
- die klassifizierten Daten umfassen:
- mindestens eine von Basisschichtinformationen (Bi) mit zugeordneten Basisschicht-Paritätsinformationen (Bp), und
- mindestens eine von Erweiterungsschichtinformationen (Ei) mit zugeordneten Erweiterungsschicht-Paritätsinformationen (Ep), und
- Verringern einer Menge der Basisschichtinformationen (Bi) und zugeordneter Basisschicht-Paritätsinformationen (Bp) und
- Erhöhen einer Menge der Erweiterungsschichtinformationen (Ei) und zugeordneter Erweiterungsschicht-Paritätsinformationen (Ep),
Bilden der Zusammensetzung priorisierter Daten, wenn die Netzbedingungen für das Rendern des Medienobjekts vorteilhaft sind,
und
- Übertragen der eingestellten priorisierten Daten über das Netz an mindestens einen Nutzer.

7. Verfahren nach Anspruch 1, wobei die klassifizierten Daten durch eine Vorwärtsfehlerkorrekturcode-Operation unter Verwendung von Reed-Solomon-Codes im Voraus codiert werden und die klassifizierten Daten in Übereinstimmung mit der Datenklasse gespeichert werden.

8. Verfahren nach Anspruch 7, wobei ein Multimediaserver die Zusammensetzung der priorisierten Daten auswählt, damit sie auf der Grundlage von Netzbedingungen übertragen werden, indem er auf einen der Datenklasse entsprechenden Datenspeicher zugreift.

9. Verfahren nach Anspruch 1, wobei mehr als eine Schicht von Erweiterungsinformationen und zugeordneten Prioritätsdaten die klassifizierten Daten bilden.

10. Verfahren nach Anspruch 1, wobei Netzbedingungen, die während des Schritts des Übertragens betrachtet werden, mindestens eine der Folgenden umfassen: verfügbare Bandbreite, erwarteter Verlust übertragener Daten, tatsächlicher Verlust übertragener Daten auf der Grundlage eines Nutzerprofils, historische Netzbedingungen und eine spezifische Anforderung für die Zusammensetzung klassifizierter Daten, die als die priorisierten Daten übertragen werden.

11. Verfahren nach Anspruch 1, wobei die während des Schritts des Einstellens betrachteten Netzbedingungen mindestens eine der Folgenden umfassen: eine Änderung der verfügbaren Bandbreite, eine Änderung des erwarteten Verlusts übertragener Daten, eine Änderung des Verlusts übertragener Daten und eine Anforderung zum Ändern der Zusammensetzung klassifizierter Daten, die als die priorisierten Daten übertragen werden.

12. Verfahren zum Einstellen und Übermitteln priorisierter Daten, die ein Medienobjekt repräsentieren,
wobei das Verfahren die folgenden Schritte umfasst:
- Bestimmen von Netzbedingungen;
- Übertragen priorisierter Daten in Übereinstimmung mit den Netzbedingungen, wobei
die priorisierten Daten als eine Zusammensetzung klassifizierter Daten erzeugt werden, die repräsentieren:
mindestens eine Basisschicht von Informationen (Bi) mit zugeordneten Paritätsdaten (Bp) und
mindestens eine Erweiterungsschicht von Informationen (Ei) mit zugeordneten Paritätsdaten (Ep);
und
wobei die Zusammensetzung der übertragenen Basisschichtinformationen (Bi) mit zugeordneten Paritätsdaten (Bp) und der Erweiterungsschichtinformationen (Ei) mit zugeordneten Paritätsdaten (Ep) in Übereinstimmung mit erwarteten Netzbedingungen bestimmt werden,
wobei
(i) wenn sich die Netzbedingungen verbessern,
eine übertragene Menge der Erweiterungsschicht (Ei, Ep) zugeordneter Daten erhöht wird, und
eine übertragene Menge der Basisschicht zugeordneter Daten verringert wird,
und
(ii) wenn sich die Netzbedingungen verschlechtern,
die übertragene Menge der Erweiterungsschicht (Ei, Ep) zugeordneter von Datenverringert wird, und
die übertragene Menge der Basisschicht zugeordneter Daten erhöht wird, indem der Erweiterungsschicht zugeordnete Daten durch mehr der Basisschicht zugeordnete Daten ersetzt werden.

13. Verfahren nach Anspruch 12, wobei priorisierte Daten in Form von Datenpaketen gesendet werden.

14. Verfahren nach Anspruch 13, wobei Datenpakete mit mehr Erweiterungsschichtinformationen mit zugeordneten Paritätsdaten gepackt werden, wenn Platz verfügbar ist.

15. Verfahren nach Anspruch 12, wobei die Zusammensetzung klassifizierter Daten, die als die priorisierten Daten übertragen werden, in Ansprechen auf eine Anforderung von einem Decodierer geändert wird.

16. Verfahren nach Anspruch 12, wobei die während des Schritts des Bestimmens betrachteten Netzbedingungen mindestens eine der Folgenden umfassen: verfügbare Bandbreite, erwarteter Verlust übertragener Daten, tatsächlicher Verlust übertragener Daten auf der Grundlage eines Nutzerprofils, historische Netzbedingungen und eine spezifische Anforderung für die Zusammensetzung klassifizierter Daten, die als die priorisierten Daten übertragen werden.

17. Verfahren nach Anspruch 12, wobei bidirektionale "B"-Rahmen ausschließlich in der Erweiterungsschicht angeordnet werden und intra-codierte "I"-Rahmen und prädiktive "P"-Rahmen ausschließlich in der Basisschicht angeordnet werden, bis der Datenverlust verringert ist, wenn das Netz Datenverluste erfährt.

## Revendications

1. Procédé pour communiquer des données représentant un objet média encodées en données classifiées représentant
- des informations de couche de base (Bi) et
- des informations de couche d'amélioration (Ei) dans une structure de réseau (160), comprenant les étapes suivantes :
- génération, pour la transmission (230) sur le réseau, d'une composition des données classifiées en tant que données hiérarchisées selon les conditions réseau attendues, où les données classifiées comprennent
- au moins un élément d'information de couche de base (Bi) avec les informations de parité de couche de base (Bp) associées et
- au moins un élément d'information de couche d'amélioration (Ei) avec les informations de parité de couche d'amélioration (Ep) associées ;
- ajustement (240) de la composition des données hiérarchisées pour la transmission
en réponse à un changement des conditions réseau entraînant une perte de données sur ledit réseau, où
un volume de données desdites informations de parité de couche d'amélioration (Ep) ou desdites informations de couche d'amélioration (Ei) baisse et
un volume de données desdites informations de parité (Bp) associées à ladite couche de base augmente,
via le remplacement desdites informations de parité de couche d'amélioration (Ep) ou desdites informations de couche d'amélioration (Ei) par lesdites informations de parité de couche de base (Bp) respectivement ; et
- transmission desdites données hiérarchisées sur ledit réseau à un utilisateur.

2. Procédé selon la revendication 1, dans lequel les données classifiées sont pré-encodées.

3. Procédé selon la revendication 1, dans lequel l'étape de transmission est permise par un serveur multimédia.

4. Procédé selon la revendication 1, dans lequel les données hiérarchisées sont encodées par une opération d'encodage sélectionnée à partir d'au moins l'un des éléments suivants : variabilité temporelle et partitionnement de données.

5. Procédé selon la revendication 1, dans lequel les données hiérarchisées sont transmises sous forme de paquets de données à numérotation séquentielle.

6. Procédé pour communiquer des données représentant un objet média encodées en données classifiées représentant des informations de couche de base et des informations de couche d'amélioration sur une structure de réseau (160), comprenant les étapes suivantes :
- génération, pour la transmission (230) sur le réseau, d'une composition des données classifiées en tant que données hiérarchisées selon les conditions réseau attendues, où
les données classifiées comprennent
- au moins un élément d'information de couche de base (Bi) avec les informations de parité de couche de base (Bp) associées et
- au moins un élément d'information de couche d'amélioration (Ei) avec les informations de parité de couche d'amélioration (Ep) associées ;
- réduction d'un volume des informations de couche de base (Bi) et des informations de parité de couche de base (Bp) associées et
- augmentation d'un volume des informations de couche d'amélioration (Ei) et des informations de parité de couche d'amélioration (Ep) associées formation de la composition des données hiérarchisées lorsque les conditions réseau sont favorables pour le rendu de l'objet média,
et
- transmission desdites données hiérarchisées ajustées sur ledit réseau à au moins un utilisateur.

7. Procédé selon la revendication 1, dans lequel les données classifiées sont pré-encodées par une opération de code de correction d'erreur sans voie de retour à l'aide de codes Reed Solomon et les données classifiées sont stockées selon la classe de données.

8. Procédé selon la revendication 7, dans lequel un serveur multimédia sélectionne la composition des données hiérarchisées à transmettre selon les conditions réseau en accédant à un magasin de données correspondant à la classe de données.

9. Procédé selon la revendication 1, dans lequel plusieurs couches d'informations d'amélioration et les données de priorité associées forment les données classifiées.

10. Procédé selon la revendication 1, dans lequel les conditions réseau prises en compte à l'étape de transmission comprennent au moins l'un des éléments suivants :
bande passante disponible, perte de données transmises attendue, perte de données transmises réelle selon un profil utilisateur, conditions réseau historiques et demande spécifique concernant la composition des données classifiées transmises en tant que données hiérarchisées.

11. Procédé selon la revendication 1, dans lequel les conditions réseau prises en compte à l'étape d'ajustement comprennent au moins l'un des éléments suivants :
changement de la bande passante disponible, changement de la perte de données transmises attendue, changement de la perte de données transmises et demande de changement de la composition des données classifiées transmises en tant que données hiérarchisées.

12. Procédé d'ajustement et de communication de données hiérarchisées représentant un objet média comprenant les étapes suivantes :
- détermination des conditions réseau ;
- transmission des données hiérarchisées en fonction des conditions réseau, où les données hiérarchisées sont générées comme une composition de données classifiées représentant au moins une couche de base d'informations (Bi) avec les données de parité (Bp) associées et au moins une couche d'amélioration d'informations (Ei) avec les données de parité (Ep) associées ;
et
la composition des informations de couche de base (Bi) transmises avec les données de parité (Bp) associées et des informations de couche d'amélioration (Ei) avec les données de parité associées (Ep) est déterminée en fonction des conditions réseau attendues,
où
(i) lorsque lesdites conditions réseau s'améliorent,
un volume transmis de données associées à ladite couche d'amélioration (Ei, Ep) augmente et
un volume transmis de données associées à ladite couche de base baisse, et
(ii) lorsque lesdites conditions réseau se dégradent,
ledit volume transmis de données associées à ladite couche d'amélioration (Ei, Ep) diminue et
ledit volume transmis de données associées à ladite couche de base augmente,
via le remplacement des données associées à la couche d'amélioration par davantage de données associées à la couche de base.

13. Procédé selon la revendication 12, dans lequel les données hiérarchisées sont envoyées sous la forme de paquets de données.

14. Procédé selon la revendication 13, dans lequel les paquets de données contiennent davantage d'informations de couche d'amélioration avec les données de parité associées lorsque de l'espace est disponible.

15. Procédé selon la revendication 12, dans lequel la composition des données classifiées transmises en tant que données hiérarchisées change en réponse à une demande d'un décodeur.

16. Procédé selon la revendication 12, dans lequel les conditions réseau prises en compte à l'étape de détermination comprennent au moins l'un des éléments suivants : bande passante disponible, perte de données transmises attendue, perte de données transmises réelle selon un profil utilisateur, conditions réseau historiques et demande spécifique concernant la composition des données classifiées transmises en tant que données hiérarchisées.

17. Procédé selon la revendication 12, dans lequel lorsque ledit réseau subit des pertes de données, des trames « B » bidirectionnelles sont placées exclusivement dans ladite couche d'amélioration et des trames « I » intra-codées et des trames « P » prédictives sont placées exclusivement dans ladite couche de base jusqu'à ce que ladite perte de données soit réduite.
